# EUROPÄISCHE PATENTSCHRIFT

(11) **EP 3 344 733 B1**
(45) Veröffentlichungstag und Bekanntmachung des Hinweises auf die Patenterteilung: **13.11.2019**
(21) Anmeldenummer: 16738093.0
(22) Anmeldetag: 05.07.2016
(51) Int. Cl.: C10J 3/76, C10J 3/84, C10J 3/48, C10K 1/10

(54) **VERBLOCKUNGSFREIER WASSERÜBERLAUF AUS DEM WASSERMANTEL EINES QUENCHERS IN DEN QUENCHRAUM**
BLOCKAGE-FREE WATER OVERFLOW FROM THE WATER JACKET OF A QUENCHER INTO THE QUENCHING CHAMBER
TROP-PLEIN DÉPOURVU DE BOUCHAGE D'UNE CHEMISE D'EAU D'UN REFROIDISSEUR DANS LA CHAMBRE DE REFROIDISSEMENT

(30) Priorität: 02.09.2015 DE 102015216783
(43) Veröffentlichungstag der Anmeldung: 11.07.2018
(73) Patentinhaber: Siemens Aktiengesellschaft, 80333 München (DE)
(72) Erfinder: HANNEMANN, Frank, 91341 Röttenbach (DE); JUST, Tino, 09599 Freiberg (DE); MEHLHOSE, Friedemann, 09599 Freiberg (DE); WERNER, Jörg, 91353 Hausen (DE)
(86) Internationale Anmeldenummer: PCT/EP2016/065790
(87) Internationale Veröffentlichungsnummer: WO 2017/036634

(56) Entgegenhaltungen:
- DE-A1-102012 216 678
- US-A1- 2008 005 966
- US-A1- 2014 069 525

## Beschreibung

Die Erfindung betrifft eine Vorrichtung zur Abführung von Kühlwasser aus einem wassergefüllten Ringraum für die Kühlung des Druckmantels in einen Quenchraum, in dem heißes, staubund schlackeführendes Rohgas gekühlt wird.

Die Erfindung bezieht sich auf eine Technologie zur Flugstromvergasung, bei der feste und flüssige Brennstoffe mit einem freiem Sauerstoff enthaltenden Vergasungsmittel unter Drücken bis 10 MPa und Temperaturen bis 1800°C in ein H₂- und CO-reiches Rohgas umgesetzt werden. Bei der Flugstromvergasung wird das mit Temperaturen bis 1800°C den Reaktionsraum gemeinsam mit Flugstaub und der zu Schlacke aufgeschmolzenen Brennstoffasche verlassende Rohgas in einem Quenchraum durch das Einspritzen von Wasser im Überschuss gewaschen und bis zur Wasserdampfsättigung gekühlt.

Patentdokument DE 10 2012 216 678 A1 offenbart eine Sprühdüse zum Einspritzen von Kühl- und Waschwasser in einen Quenchraum, in dem heißes sowie staub- und schlackeführendes Vergasungsgas gekühlt und einer Wasserwäsche unterzogen wird. Die Sprühdüse ist von einer rohrförmigen Schutzhülle konzentrisch umgeben, die um das 1 bis 4-fache des Düsendurchmessers über den Düsenkopf der Sprühdüse hinausragt. Der Ringspalt zwischen Sprühdüse und Schutzhülle kann durch ein inertes Spülgas gespült sein.

Aus dem Patentdokument US 2008/005966 A1 ist ein Quencher für einen Flugstromvergaser bekannt, bei dem das zur Kühlung in die Quenchraum eingebrachte Kühlwasser aufgeteilt wird, wobei ein Teil in die als Freiraum gestaltete Quenchraum fein verteilt eingedüst wird und ein weiterer Teil zum Schutz der drucktragenden Behälterwand in einen Ringspalt zwischen der drucktragenden Behälterwand und einer eingebrachten Metallschürze, welche über die Höhe auch zweigeteilt ausgeführt sein kann, am Boden eingespeist wird und dieser Teil des Kühlwassers im Ringspalt nach oben strömt, wodurch der Mantel vor thermischer Überbeanspruchung geschützt wird. Das aufsteigende Quenchwasser wird durch den sehr guten Wärmeübergang aufgewärmt oder bei Verwendung von vorgewärmtem Quenchwasser wird der Wärmeverlust im Quenchraum minimiert. Das an den Wehren überlaufende Wasser läuft unter Ausbildung eines Wasserfilmes an der Innenwand des Mantels in das am Boden befindliche Wasserbad.

Nachteilig an der beschriebenen Lösung ist die begrenzte Betriebszeit der Überlaufwehre aufgrund von Verblockungen. Durch den Eintrag und die Ausscheidungen von Erdalkalikarbonaten und Ablagerungen von Feinstaub bilden sich im Laufe kurzer Betriebszeit feste Anbackungen in den Überlaufwehren. Die Ablagerungen führen zum Verschluss des Ringspaltes und behindern das Ausströmen des Kühlwassers aus dem Mantelringraum. Die Wehrüberläufe des Quenchers müssen in regelmäßigen Abständen unter erheblichen Arbeitsaufwand gereinigt werden.

Aus dem Patentdokument US 2014/069525 A1 ist die Verwendung einer Hülse, die eine Quenchdüse ummantelt, zur Füllstandsregelung in der Quenchkammer bekannt. Offenbart wird eine Hülse, welche in den Quenchraum soweit hineingezogen ist, dass sie den Düsenkopf der Sprühdüse um das 1 bis 4-fache des Düsendurchmessers überragt oder aber bis hinter die Mantelschürze zurückgezogen ist, wobei die Schutzhülse mit der inneren Mantelschürze abschließt und der Ringraum zwischen Hülse und Sprühdüse mit Inertgas gespült wird.

Der Erfindung liegt das Problem zugrunde, eine Abführung von Kühlwasser aus einem wassergefüllten Ringraum zur Kühlung des Druckmantels in einen Quenchraum, in dem heißes sowie staubund schlackeführendes Rohgas gekühlt wird, zu schaffen, bei der Verblockungen der Wasserabführung erheblich reduziert sind.

Das Problem wird durch eine Vorrichtung mit den Merkmalen des Anspruchs 1 gelöst.

Erfindungsgemäß erfolgt die Abführung des Überlaufwassers aus dem Wasser gefüllten Ringraum (Skirtwasser) in den Quenchraum über die Hülse 12 einer Quenchlanze 7, wobei eine Verblockung durch den Sprühkegel 6 der Sprühdüse 15 verhindert wird.

Die Erfindung macht sich die Erkenntnis zu Nutze, dass zum Einen die Bildung von Verblockungen verstärkt da auftritt, wo das Kühlwasser aus dem Ringspalt in den Quenchraum eintritt, und dass zum Anderen - bei erfindungsgemäßer Führung des Kühlwassers aus dem Ringspalt 13 durch die Hülse 12 der Quenchlanze 7 - der scharfe Strahl des Sprühkegels 16 der Bildung von Verblockungen entgegenwirkt. Das Kühlwasser aus dem Ringraum 13 wird in vorteilhafter Weise zusätzlich zu dem Quenchwasser 16 aus der Sprühdüse 15 zum Kühlen und Reinigen des Rohgases 6 in dem Quenchraum 1 verwendet. Der Aufwand für die Beseitigung von Verblockungen ist erheblich reduziert.

In einer besonderen Ausgestaltung der Erfindung ist eine Abführung von Kühlwasser aus dem Ringraum mittels einer Öffnung 18 in der Hülse 12 im Bereich des Ringraums 13 gegeben derart, dass ein direkter Fluss von Kühlwasser aus dem Ringraum durch die Öffnung in das Innere der Hülse gegeben ist.

In einer besonderen Ausgestaltung der Erfindung ist der Mantelüberlauf durch die Abführung des Überlaufwassers mittels eines oder mehrerer Rohre 10, gegebenenfalls Halbrohre, in eine oder mehrere, die Quenchdüsen ummantelnden Hülsen gegeben.

Bei zweigeteiltem Mantelringraum 13, der herkömmlich einen oberen und einen unteren Wehrüberlauf erfordern würde, erfolgt die Zuführung des Überlaufwassers in die ummantelnde Hülse von oben bzw. von unten über ein oder mehrere Rohre, gegebenenfalls Halbrohre.

Erfindungsgemäß erfolgt also die Abführung des im Ringraum nach oben strömenden Wassers, des sogenannten Skirt-Wassers mittels eines oder mehrerer Rohre / Halbrohre. Zur Vermeidung von Verblockungen des Wasseraustritts erfolgt die Abführung des Überlaufwassers mittels die Quenchdüsen ummantelnde Hülsen 12, welche bis in den Quenchraum 1 soweit hineingezogen sind, dass sie den Düsenkopf der Sprühdüsen 9 um das 1 bis 4-fache des Düsendurchmessers überragen. Die Hülsen können mit einem Wasseranschluss, der eine thermische Dehnung der Metallschürze berücksichtigt, ausgerüstet sein (Kompensator 11 in Rohrleitung 10).

Vorteilhafte Weiterbildungen der Erfindung sind in den Unteransprüchen angegeben.

Die Erfindung wird im Folgenden als Ausführungsbeispiel in einem zum Verständnis erforderlichen Umfang anhand von Figuren näher erläutert. Dabei zeigen:
- Fig 1: eine Quencheinrichtung mit innerem Mantel und getrennter Skirtspülung,
- Fig 2: Details einer ersten erfindungsgemäßen Quenchlanze,
- Fig 3: Details einer zweiten erfindungsgemäßen Quenchlanze und
- Fig 4: Details einer dritten erfindungsgemäßen Quenchlanze.

In den Figuren bezeichnen gleiche Bezeichnungen gleiche Elemente.

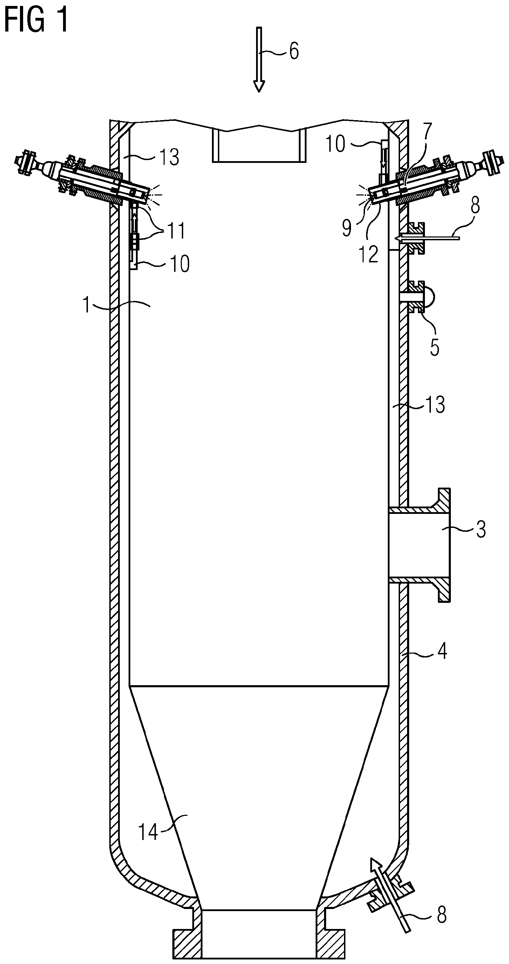

Die in Fig 1 dargestellte Quencheinrichtung für einen unter Drücken bis 10 MPa Brennstoffe, insbesondere Kohlenstaub, vergasenden Flugstromvergaser ist als Freiraumquench ausgebildet. In dem drucktragenden Behälter 4 ist ein innerer Mantel 2 angeordnet, der den Quenchraum begrenzt. In dem Ringraum 13 zwischen drucktragendem Behälter und innerem Mantel steigt Kühlwasser, das über einen Anschluss 8 zugeführt ist, auf. Im Ausführungsbeispiel nach Fig 1 sind zwei separate, übereinander angeordnete Ringräume gegeben. Eine Quenchlanze 7 ist derart unter kleinem Winkel nach unten geneigt angeordnet, dass sie die Behälterwand und den inneren Mantel durchdringt.

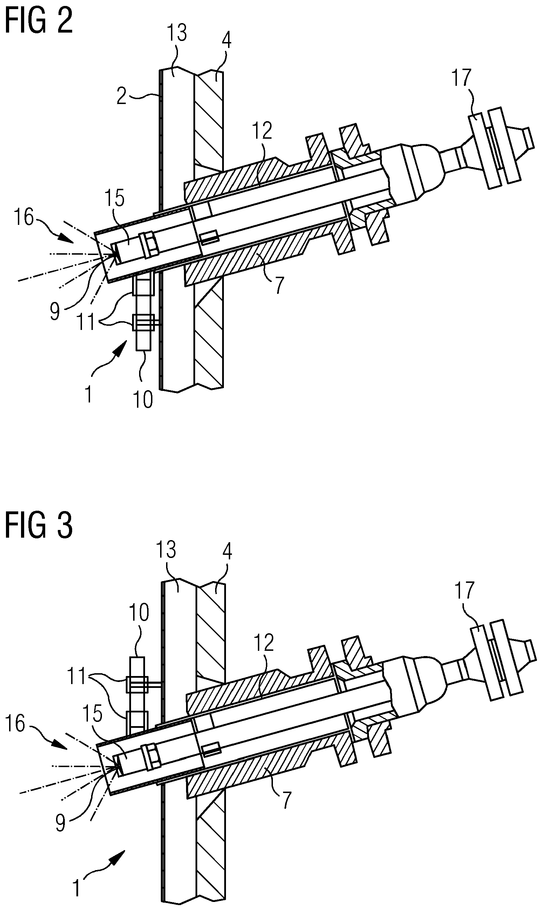

Bei der in Fig 2 dargestellten Quencheinrichtung ragt die Quenchlanze mit ihrer Hülse in den Quenchraum, wobei das das Überlaufwasser aus dem Ringraum führende Rohr 10 von unten mit der Hülse 12 verbunden ist.

Bei der in Fig 3 dargestellten Quencheinrichtung ragt die Quenchlanze mit ihrer Hülse in den Quenchraum, wobei das das Überlaufwasser aus dem Ringraum führende Rohr 10 von oben mit der Hülse 12 verbunden ist.

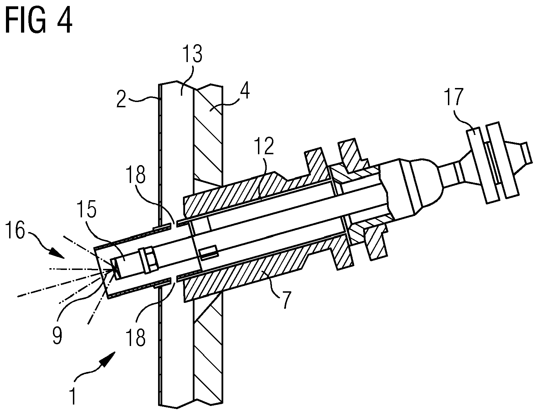

Bei der in Fig 4 dargestellten Quencheinrichtung ragt die Quenchlanze mit ihrer Hülse in den Quenchraum, wobei die Hülse da, wo sie im Ringspalt verläuft, eine oder mehrere Öffnungen 18 zur Weiterleitung des Kühlwassers aus dem Ringspalt aufweist.

Die Erfindung ist auch gegeben durch eine Vorrichtung zur Abführung von Kühlwasser aus dem wassergefüllten Zwischenraum (13) in einen Quenchraum (1), der von heißen staub- und schlacke führenden Vergasungsgas mit Drücken bis 10 MPa und Temperaturen bis 1800°C beaufschlagt wird, wobei das Kühlwasser aus dem wassergefüllten Ringraum in den Quenchraum mittels Rohren bzw. Halbrohren über eine mittels Quenchdüse (9) besprühte Hülse (12) abgeführt wird.

In einer besonderen Ausgestaltung der Erfindung wird das Überlaufwasser einer Hülse (12) über ein oder mehrere Rohre beziehungsweise Halbrohre zugeführt.

In einer besonderen Ausgestaltung der Erfindung schließt die Hülse (12) mit dem inneren Mantel ab und der Düsenkopf (9) ist um das 1 bis 4-fache des Düsendurchmessers vom offenen Ende der Hülse (12) zurückgezogen.

In einer besonderen Ausgestaltung der Erfindung wird ein Kompensator zum Ausgleich von thermischen Spannungen des inneren Mantels verwendet.

In einer besonderen Ausgestaltung der Erfindung wird ein Teil des in die Quenchraum eingebrachten Kühlwassers über die Düsen derart zugeführt, dass es sich in dem als Freiraum gestalteten Quenchraum fein verteilt.

Die vorliegende Erfindung wurde zu Illustrationszwecken anhand von konkreten Ausführungsbeispielen im Detail erläutert. Dabei können Elemente der einzelnen Ausführungsbeispiele auch miteinander kombiniert werden. Die Erfindung soll daher nicht auf einzelne Ausführungsbeispiele beschränkt sein, sondern lediglich eine Beschränkung durch die angehängten Ansprüche erfahren.

### Bezugszeichenliste

- 1: Quenchraum
- 2: Mantelschürze, innerer Mantel, Skirt
- 3: Rohgasabgang
- 4: Druckmantel
- 5: Anschluss Füllstandsanzeige, Wasserspiegel Wasserbad
- 6: Rohgas und Schlackeeintritt
- 7: Quenchlanze
- 8: Anschluss Skirtspülung
- 9: Düsenkopf
- 10: Wasserabführung aus wassergefülltem Zwischenraum
- 11: Kompensator
- 12: Hülse
- 13: Wassergefüllter Zwischenraum, Ringspalt, Ringraum, Wassermantel
- 14: Quenchersumpf, Wasserbad
- 15: Sprühdüse
- 16: Sprühkegel
- 17: Flanschverbindung Zuführung Quenchwasser für Sprühdüse
- 18: Durchbruch Hülse

## Patentansprüche

1. Vorrichtung zur Kühlung von heißem Rohgas und Schlacke aus der Flugstromvergasung von flüssigen und festen Brennstoffen bei Temperaturen des Rohgases von 1.200 bis 1.800°C und Drücken bis 10 MPa in einem unterhalb des Vergasungsreaktors angeordneten Quenchraum (1), bei der
- in der drucktragenden Behälterwand (4) ein den Quenchraum begrenzender innerer Mantel (2) angeordnet ist, derart, dass ein Ringspalt (13) zwischen der Behälterwand und dem inneren Mantel gebildet ist,
- über einen Stutzen (8) am unteren Ende des Ringspaltes eine Zuführung von Kühlwasser gegeben ist derart, dass es im Ringspalt nach oben steigt,
- mindestens eine Quenchlanze (7) gegeben ist, die eine von einer Hülse (12) ummantelte Quenchdüse (15) zum Einspritzen von Kühlwasser (16) in den Quenchraum aufweist und die derart angeordnet ist, dass sie die Behälterwand und den inneren Mantel durchdringt,
**dadurch gekennzeichnet, dass**
- eine Abführung des Kühlwassers aus dem Ringspalt über die Hülse in den Quenchraum gegeben ist.

2. Vorrichtung nach Anspruch 1,
**dadurch gekennzeichnet, dass**
der Düsenkopf (9) der Quenchdüse (15) um das 1 bis 4-fache des Düsendurchmessers vom offenen Ende der Hülse (12) zurückgezogen ist.

3. Vorrichtung nach einem der vorstehenden Ansprüche,
**dadurch gekennzeichnet, dass**
die Hülse da wo sie im Ringspalt verläuft, eine Öffnung (18) zur Weiterleitung des Kühlwassers aus dem Ringspalt aufweist.

4. Vorrichtung nach einem der vorstehenden Ansprüche
**dadurch gekennzeichnet, dass**
die Hülse (12) über den inneren Mantel hinaus in den Quenchraum hineinragt.

5. Vorrichtung nach Anspruch 4,
**dadurch gekennzeichnet, dass**
der Ringspalt über eine Rohrleitung (10) mit der Hülse verbunden ist.

6. Vorrichtung nach Anspruch 5,
**dadurch gekennzeichnet, dass**
die Rohrleitung (10) einen Kompensator (11) zum Längenausgleich aufweist.

7. Vorrichtung nach einem der vorstehenden Ansprüche,
**dadurch gekennzeichnet, dass**
in unterschiedlichen Ebenen des Quenchraums mehrere voneinander getrennte Ringspalte (13) angeordnet sind und die Hülse über eine Rohrleitung mit dem Ablauf eines Ringspalts verbunden ist, der nicht identisch ist mit dem Ringspalt, in dem die Quenchdüse nebst Hülse angeordnet ist.

## Claims

1. Device for cooling hot raw gas and slag from the entrainedflow gasification of liquid and solid fuels at temperatures of the raw gas of from 1200 to 1800°C and pressures of up to 10 MPa in a quenching chamber (1) arranged below the gasification reactor, in which
- an inner jacket (2) which delimits the quenching chamber is arranged in the pressure-bearing container wall (4) in such a way that an annular gap (13) is formed between the container wall and the inner jacket,
- a feed of cooling water is provided via a connection piece (8) at the lower end of the annular gap in such a way that said cooling water rises upward in the annular gap,
- at least one quenching lance (7) is provided which has a quenching nozzle (15), which is encased by a sleeve (12), for injecting cooling water (16) into the quenching chamber and which is arranged in such a way that it penetrates through the container wall and the inner jacket, **characterized in that**
- a discharge of the cooling water from the annular gap via the sleeve into the quenching chamber is provided.

2. Device according to Claim 1,
**characterized in that**
the nozzle head (9) of the quenching nozzle (15) is set back from the open end of the sleeve (12) by from 1 to 4 times the nozzle diameter.

3. Device according to one of the preceding claims,
**characterized in that**,
at the point where it extends in the annular gap, the sleeve has an opening (18) for forwarding the cooling water from the annular gap.

4. Device according to one of the preceding claims,
**characterized in that**
the sleeve (12) projects beyond the inner jacket into the quenching chamber.

5. Device according to Claim 4,
**characterized in that**
the annular gap is connected to the sleeve via a pipeline (10) .

6. Device according to Claim 5,
**characterized in that**
the pipeline (10) has a compensator (11) for length compensation.

7. Device according to one of the preceding claims,
**characterized in that**
a plurality of annular gaps (13) which are separated from one another are arranged at different levels of the quenching chamber and the sleeve is connected via a pipeline to the outlet of an annular gap which is not identical to the annular gap in which the quenching nozzle together with sleeve is arranged.

## Revendications

1. Dispositif de refroidissement de gaz brut chaud et de scories provenant de la gazéification à flux entraîné de combustibles liquides et solides à des températures de gaz brut situées dans la plage allant de 1 200 à 1 800 °C et à des pressions pouvant aller jusqu'à 10 MPa dans une chambre de refroidissement (1) agencée sous le réacteur de gazéification, dans lequel
- une chemise interne (2) délimitant la chambre de refroidissement est agencée dans la paroi du récipient sous pression (4), de sorte qu'un espace annulaire (13) est formé entre la paroi du récipient et la chemise interne,
- une alimentation en eau de refroidissement est prévue via une pièce de raccordement (8) au niveau de l'extrémité inférieure de l'espace annulaire, de sorte que l'eau de refroidissement monte dans l'espace annulaire,
- au moins une lance de refroidissement (7) est prévue, qui comporte une buse de refroidissement (15) entourée d'un manchon (12) pour injecter de l'eau de refroidissement (16) dans la chambre de refroidissement et qui est agencée de manière à pénétrer dans la paroi du récipient et dans la chemise interne, **caractérisé en ce que**
- une évacuation de l'eau de refroidissement hors de l'espace annulaire est prévue via le manchon dans la chambre de refroidissement.

2. Dispositif selon la revendication 1,
**caractérisé en ce que**
la tête de buse (9) de la buse de refroidissement (15) est en retrait par rapport à l'extrémité ouverte du manchon (12) de 1 à 4 fois le diamètre de la buse.

3. Dispositif selon l'une des revendications précédentes,
**caractérisé en ce que**
le manchon, à l'endroit où il passe dans l'espace annulaire, comporte une ouverture (18) permettant d'acheminer l'eau de refroidissement depuis l'espace annulaire.

4. Procédé selon l'une des revendications précédentes,
**caractérisé en ce que**
le manchon (12) dépasse de la chemise interne dans la chambre de refroidissement.

5. Dispositif selon la revendication 4,
**caractérisé en ce que**
l'espace annulaire est relié au manchon via un conduit (10).

6. Dispositif selon la revendication 5,
**caractérisé en ce que**
le conduit (10) comporte un compensateur (11) pour la compensation de longueur.

7. Dispositif selon l'une des revendications précédentes,
**caractérisé en ce que**
plusieurs espaces annulaires (13) séparés les uns des autres sont agencés à différents niveaux de la chambre de refroidissement et le manchon est relié via un conduit à la sortie d'un espace annulaire différent de l'espace annulaire dans lequel est agencée la buse de refroidissement en plus du manchon.
